## Europäisches Patentamt
## European Patent Office
## Office européen des brevets

(11) Publication number: **0 161 042**
**B1**

## EUROPEAN PATENT SPECIFICATION

(45) Date of publication of patent specification: **10.05.89**

(21) Application number: **85301352.2**

(22) Date of filing: **28.02.85**

(51) Int. Cl.⁴: **B 67 D 1/10,** B 67 D 1/00,
B 67 D 1/12, B 67 D 3/00,
G 01 F 23/24, G 05 D 9/12

(54) Self-fill system.

(30) Priority: **19.03.84 US 590992**

(43) Date of publication of application:
**13.11.85 Bulletin 85/46**

(45) Publication of the grant of the patent:
**10.05.89 Bulletin 89/19**

(84) Designated Contracting States:
**AT BE CH DE FR GB IT LI LU NL SE**

(56) References cited:
**EP-A-0 008 095**
**US-A-3 225 965**
**US-A-3 528 587**
**US-A-4 390 793**

(73) Proprietor: **JET SPRAY CORP**
**825 University Avenue P.O. Box 8250**
**Norwood Massachusetts 02062 (US)**

(72) Inventor: **Jacobs, Leonard**
**99 Yarmouth Street**
**Chestnut Hill Massachusetts (US)**
Inventor: **Arzberger, William**
**13 Knollwood Road**
**Medfield Massachusetts (US)**
Inventor: **Coppola, Peter**
**2 Garrity Road**
**Burlington Massachusetts 01803 (US)**
Inventor: **Gross, Thomas A. O.**
**Concord Road**
**Lincoln Massachusetts 01773 (US)**

(74) Representative: **Read, Matthew Charles et al**
**Venner Shipley & Co. 368 City Road**
**London EC1V 2QA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an automatic self filling apparatus for dispensing a liquid e.g. a beverage, comprised of water and a concentrated syrup.

A beverage dispenser is known from US-A-3 528 587 to L. G. Popinski which comprises a tank for dispensing the liquid, means for supplying water to the tank, sensor means responsive to the rise and fall of liquid in the tank, pump means for pumping the syrup into the tank, first and second fill pipes for respectively feeding water from the supply means and syrup from the pump means into the tank, and control means responsive to the sensor means for controlling operation of the pump means and the water supply means. In this known arrangement, the sensor comprises a mechanical float valve.

An object of the present invention is to provide an improved automatic self filling apparatus of the kind mentioned above but with an improved sensor and filling arrangement.

The present invention is characterised in that the sensor means comprises an upstanding post member in the tank, first and second probe means disposed at relatively low and relatively high locations on the post so as to sense relatively high and relatively low liquid levels in the tank and producing probe signals in response thereto, said control means being responsive to said probe signals to maintain the level of liquid in the tank between the relatively high and low levels, said fill pipes extending substantially coextensively with said post member upwardly from a common support member at the bottom of the tank so as to define a closely positioned array.

These characterising features of the invention provide a sensor means with no moving parts, so arranged to provide reliable and accurate operation during filling of the tank with liquid and syrup.

In order that the invention may be more fully understood an embodiment thereof will now be described by way of example with reference to the accompanying drawings wherein;

FIGS. 1A and 1B illustrate logic control circuitry for providing automatic self-fill in connection with a dispensing machine such as one that dispenses fruit juices or other beverages;

FIG. 2 is a front perspective view of a twin tank dispensing machine with one of the tanks partially cut away to illustrate the fill pipes and probe assembly as in accordance with the present invention;

FIG. 3 is a cross-sectional view taken along line 3-3 of FIG. 2 showing further details of the fill pipe and probe assembly;

FIG. 4 is a further cross-sectional view taken along line 4-4 of FIG. 3 showing the probe; and

FIG. 5 is a rear perspective view of the dispensing machine illustrated in FIG. 2.

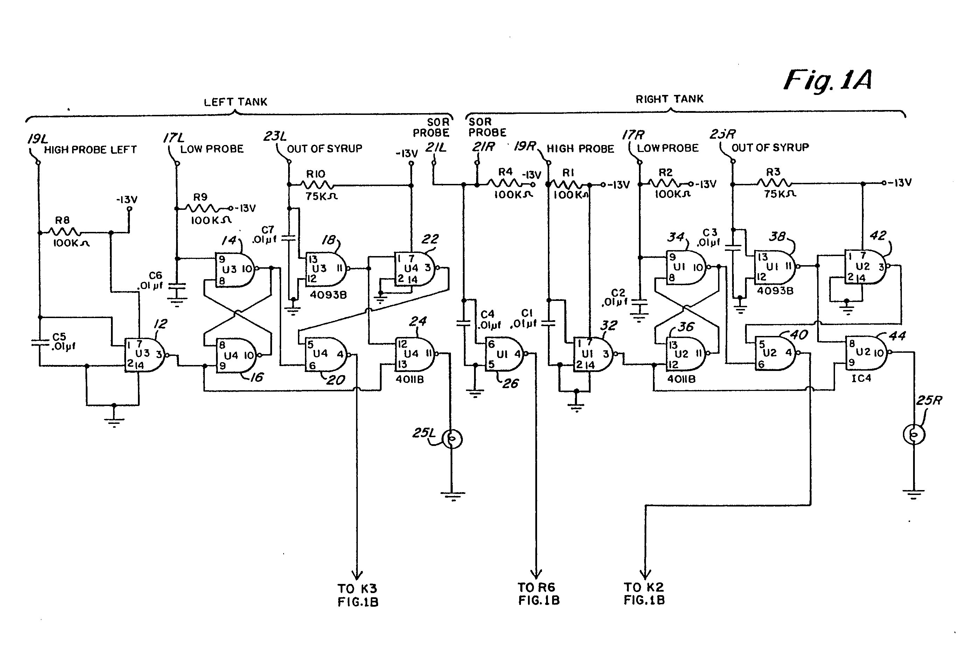

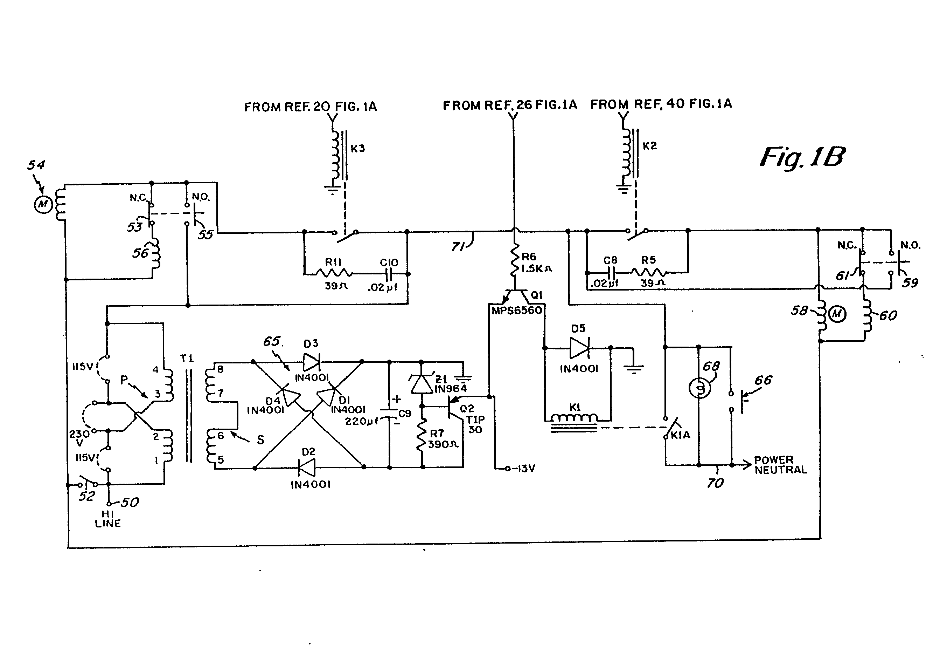

With reference to the drawing, there is depicted in FIGS 1A and 1B the control circuitry of the present invention for providing the automatic self-fill in connection with a dispensing machine.

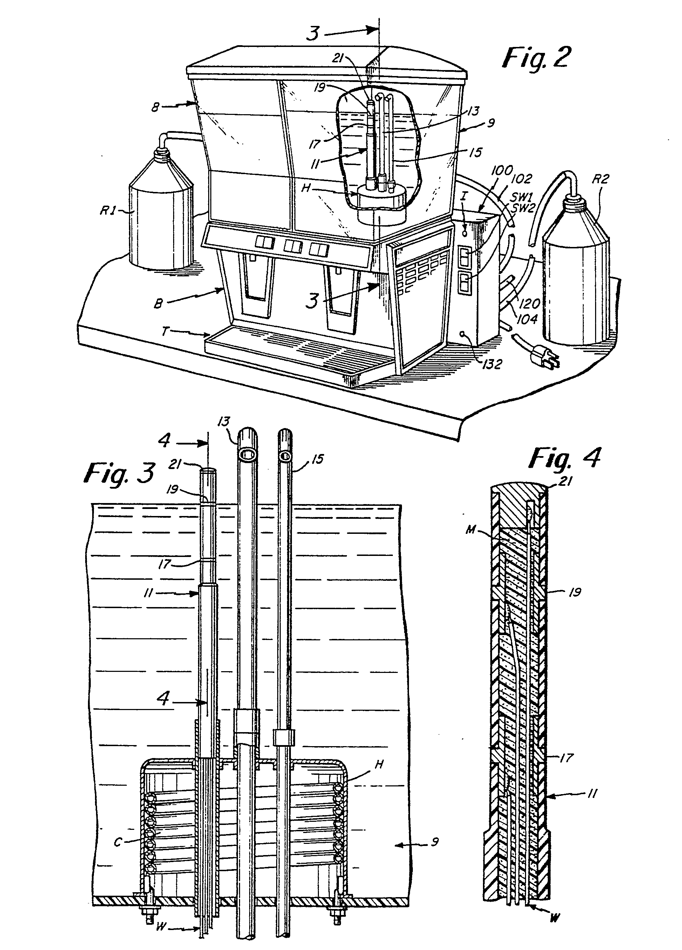

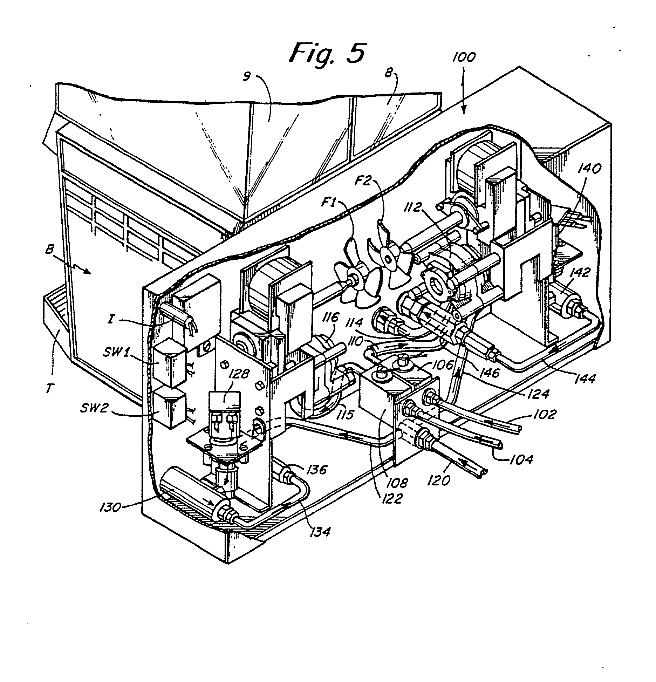

The dispensing machine with which the concepts of the invention are practiced may be of the general type depicted in FIGS. 2-5 herein, although, the concepts of the invention may also be practiced with many other forms of dispensing machine. FIGS. 2-5 herein illustrate the preferred embodiment of the automatic self-fill dispensing machine in accordance with the present invention. In this connection FIG. 2 illustrates a front perspective view of the twin tank dispensing machine with one of the tanks partially cut away to illustrate the fill pipes and probe assembly. FIG. 3 is a cross sectional view taken along line 3-3 showing further details thereof. FIG. 4 is a further cross sectional view taken along line 4-4 of FIG. 3 showing further details of the probe assembly. FIG. 5 is a rear perspective view of the dispensing machine with the housing cut away.

FIGS 1A and 1B show logic control circuitry for providing automatic self-fill in connection with a dispensing machine such as one that dispenses flavored fruit beverages. A portion of the control circuitry may be separated into two sections; one associated with a left liquid tank 8 and the other associated with a right liquid tank 9. Each of these tanks has associated therewith basically three probes the physical arrangement of which is depicted in FIGS. 2-4. In this regard there is provided in each tank a support post 11 illustrated, for example, in FIG. 3, disposed between two fill pipes 13 and 15. These fill pipes are for respectively receiving water and the syrup concentrate. On the support post 11 there are provided probes including a low probe ring 17, a high probe ring 19, and a top probe cap 21 which is for a system override function. In connection with the control circuitry the different probes are identified at the input control terminals by like reference characters. In addition there is also provided an out-of-syrup probe 23 which operates to provide an indication when the main syrup reservoir is empty. It is also noted that as depicted in FIGS. 2-4 that the details are given of the low probe ring 17, high probe ring 19, and top probe cap 21.

Prior to discussing the operation of the circuitry of FIGS. 1A and 1B reference is now made to FIG. 2 which shows the dispensing machine with its base B and associated drip tray T upon which a cup can rest under either one of the dispensing nozzles. There is, of course, a dispensing nozzle associated with each of the tanks 8 and 9. Also depicted in FIG. 2 is a first syrup concentrate reservoir R1 and a second syrup concentrate reservoir R2. FIG. 1 also illustrates an indicator I and switches SW1 and SW2. The indicator I is an out-of-syrup light. The switch SW1 is a prime switch to be discussed in detail hereinafter in connection with the circuit diagram. The switch SW2 (switch 52 in FIG. 1B) is a power switch for enabling automatic filling.

FIG. 3 shows the fill pipes 13 and 15 along with the support post 11 which comprises part of the overall probe assembly. FIG. 3 also shows the probe rings 17, 19, and probe cap 21. The fill pipes and the support post 11 are all mounted from the evaporator coil housing H. In FIG. 3 the evaporator coils C are shown. Also shown in FIG. 3 are the three wires at W which couple from the respective probe rings. Again, further reference is made hereinafter to the probes and their operation in conjunction with the overall circuitry.

In the following discussion of the operation of the circuitry, a distinction is made between the left and right probes and associated fill pipes and in this connection, the suffixes L and R are used in association with the reference characters.

In connection with FIG. 3, it is to be noted that the construction of the evaporator section is well known with the exception that in accordance with the present invention the evaporator housing is also used in a dual manner as a support for the fill pipes and the probe assembly.

It is also noted in FIG. 3 that the water fill pipe 13 preferably extends from the evaporator housing at the middle thereof. This is desired so that the evaporator coils C do not interfere with the water fee. If this line is located too close to the evaporator coils C, then freezing of the water may occur.

FIG. 4 shows the cross sectional details of the probe assembly. The majority of the probe assembly is made of an insulating dielectric material with the exception of the probe contacts which are conductive. FIG. 4 shows the wiring W individually connecting to the probe contacts such as by being soldered thereto. A filler material M may then be used to seal everything together. This may be epoxy.

FIG. 5 shows further details of the rear of the dispenser which includes a housing 100 for containing and supporting many of the components used in completing the system. Previously, reference has been made to the syrup reservoirs R1 and R2. The line 102 couples from the syrup reservoir associated with the left tank while line 104 couples from the syrup reservoir associated with the right tank. The line 102 connects to a left tank syrup sensor 106 while the line 104 couples to a right tank syrup sensor 108. Basically, each of the probe electrodes 23L and 23R in sensors 106 and 108, respectively, detects the presence of syrup in the respective lines 102 and 104. When the reservoirs are out of syrup then the out-of-syrup sensors give an indication of such which is coupled to the circuitry shown in FIGS. 1A and 1B.

From sensor 106 there is a line 110 which couples to the left tank peristaltic pump 112. A further line 114 connects from the output of the pump to the left tank to one of the syrup pipes 15L. Similarly, the output of the sensor 108 couples by way of a line 115 to the peristaltic pump 116 associated with the right hand tank. A further line not shown in FIG. 5 couples from the output of the pump 116 to the syrup fill tube 15R located in a right hand tank 9.

A water inlet is also shown in FIG. 5 at water line 120. This line splits into lines 122 and 124. The line 122 for, example, couples to the solenoid valve 128. The output of the solenoid valve 128 couples to a water flow control device 130. Associated with the flow control device 130 is a water adjustment 132 shown in FIG. 2. This is used to adjust the volume of water flow to the output line 134 and the check valve 136. The water then enters the water fill tube 13R and then enters the right tank 9.

On the left hand side there is a similar set up in which the line 124 couples to the solenoid valve 140. The output of the solenoid valve 140 couples to the water flow control device 142 which also has an associated water adjustment on the front panel. The output line 144 couples from the output of the water flow control device 142 to the check valve 146 and from there to the water fill pipe 13L in the left tank.

There are basically two reasons for the above described fill apparatus. One is interested in maintaining a sanitary environment and is thus concerned with any back siphoning of a beverage into a water line if the supply line pressure fails and a vacuum occurs. If a below level entry were used, a product could be drawn into the water line, unless a highly restrictive and expensive double ball valve were employed. In case the operator forgets to replace the inlet lines, a single ball check valve is located at the inlet to the unit. Thus, this illustrates one of the features described herein of providing fill pipes in which the liquid filling occurs in a position wherein liquid presently in the tank cannot pass back into the fill lines. This is clearly illustrated in FIG. 2 herein, wherein the fill pipes 13 and 15 extend above the top of the probe assembly. Thus, by providing the fill pipes having their outlet above the top of the probe assembly, back siphoning is not possible. Also, the apparatus can be made more simply, not requiring the use of an expensive double ball valve to prevent the product from being drawn into the water line.

A second reason for the above-beverage level inlets for water and syrup is the ease that the Brix or water syrup ratio is checked. One can merely place a bifurcated measuring cup under the syrup and water line outlets and catch the water and syrup flow, or catch both in a single glass and check the Brix with a refractometer. Brix adjustment is easily made by adjusting the water flow screw, such as the screw 132 shown in FIG. 2, located at the bottom front on each side of the unit. Control via screw 132 controls the water/syrup ratio by permitting more or less water flow during the filling sequence.

Also depicted in FIG. 5 are a series of fans F1 and F2 which are used for cooling the pump motor. Also shown are switches SW1 and SW2 along with the indicator I. In addition to the switches and indicators shown in FIGS. 2 and 5, on the opposite or left hand side of the unit there is also an indicator associated with an out-of-syrup sensor associated with the reservoir R1. There are also a pair of switches on that side including a prime switch associated with the left tank and the reset switch. There is also a water flow adjustment port associated with the left tank in the same position as the adjustment 132 shown in FIG. 2 but on the corresponding side of the dispenser.

As indicated previously, the dispensing unit includes four switches, two on each side, such as depicted by switches SW1 and SW2 in FIG. 2. As will be described hereinafter, the reset switch comprises a portion of the system override (SOR) circuitry which shuts down the unit if the beverage level rises to the system override probe cap 21. The logic in the system override circuit also deactivates the unit after a power failure and of course, when the unit is first plugged in and started. For the moment it is assumed that the system override circuit has been reset and the power supply is energized.

The circuit diagram also shows the high line 50 coupling to a transformer T1 which has a primary winding P and a secondary winding S. The output from the secondary winding couples to a full wave rectifier bridge circuit 65 comprised of diodes D1-D4. The output from this circuit couples to filter capacitor C9 and to the zener diode Z1, resistor R7 and transistor Q2. A sufficient DC voltage is established at the base of transistor Q2 so as to enable transistor Q2 to be conductive. Basically the power supply may be considered as an emitter follower circuit driven by a Zener diode shunt regulator. Further assuming that the system override function has not taken place, then transistor Q1 is also conductive; this then provides power to the relay K1 which has a diode D5 coupled there across. The circuit diagram also shows a momentary action reset switch 66 and an associated indicator lamp 68. This may be a neon discharge lamp with a series resistor. The power neutral at line 70 couples to both the reset switch 66 and the indicator 68. The line 70 also couples to one side of contact K1A associated with relay coil K1.

At an initial phase of operation the reset switch 66 is closed provide a path from the neutral line 70 through line 71 to the primary winding P of the transformer T1. This causes the AC power to be coupled to the rectifier bridge 65 and in turn provides DC power to the transistors Q1 and Q2 causing energization of the relay K1 and closure of its associated contact K1A. This latches the power circuit.

Reference is now made to the portion of the control circuitry associated with the left tank 8 and with the relay coil K3. This control circuitry includes gates 12, 14, 16, 18, 20, 22, 24 and a common gate 26. All of these gates are NAND gates. The gates 12, 14, 18 and 26 have associated therewith input capacitors C5, C6, C7 and C4, respectively. These gates provide for Schmitt triggering hysteresis inherent in the 4093 chip that is used. The Schmitt trigger action is provided at the probe input terminals so as to stabilize the logic particularly as the probes gradually dry upon a condition of a receding liquid level. The gates 14 and 16 are cross-coupled to form a binary or flip-flop device.

Thus, the high probe terminal 19L couples to the NAND gate 12; the low probe terminal 17L couples to the NAND gate 14; the out-of-syrup terminal 23L couples to the NAND gate 18; and the override probe 21L couples to the NAND gate 26. It is noted that each of these probe input circuits also includes a resistor such as the respective resistors R8, R9, R10 and R4 each coupling to the negative voltage supply. The NAND gates that are used have a logic low output when both inputs are at a logic high and alternatively they have a logic high output when either or both of the inputs are at a logic low level. In connection with the logic that is described herein the gates are connected to the liquid level probes and the probes are grounded by contact with the liquid. In the absence of the conductive liquid, these probes are driven to the negative voltage such as the -13 volts shown by means of the aforementioned resistors.

In the logic circuit that is depicted the ground level signal corresponds to a logic high or logic "1" and the signal -13 volts corresponds to the logic low or logic "0". The ground voltage has been used for logic high to prevent electrolysis corrosion of the probe electrodes by driving them at a negative voltage with respect to the liquid. The probes are cathodes which are protected by a cathodic protection principle.

In connection with the operation of the control circuit, it may first be considered that, at start-up, there is no liquid in the dispenser (tank). Thus, each of the four liquid sensing probes is ungrounded and the input to each of the corresponding gates 12, 14, 18 and 26 is at its low level (-13 volts). The outputs of these gates are thus at their high level or logic "1" (0 volts). The high output from gate 14 cross-couples to one input from gate 16 and the output from gate 16 is thus low because both of its inputs are high. The high output from gate 14 also couples to gate 20. The high output from gate 18 is converted into a low output at the output of gate 22. This, in turn, causes a high output from the gate 20 which in this logic is a ground signal. This means that the relay K3 is not energized. Also, the gate 24 received at its input two high level signals causing a low at its output which illuminates the indicator light 25L (indicator I in FIG. 2). Thus, at this point in the operation the circuit is in a static state with pump action not having yet commenced.

Each side of the dispensing unit has its individual prime switch, such as the switch SW1 shown in FIG. 2. It also has an out-of-syrup light emitting diode or indicator I which glows red when the syrup sensor is empty of syrup, which occurs when the unit is at initial start-up. To start one side, with the syrup source properly connected, one presses the momentary contact prime switch such as switch SWI (contacts 53 and 55 or 59 and 61 in FIG. 1B). This starts the pump motor 54 but shuts off the solenoid valve 56 so as not to prefill the bowl with water while the pump is pulling the syrup into the unit. When the syrup fills the syrup sensor, the LED I will go out. The button is released and the unit will fill both syrup and water.

Once the system is manually primed the out-of-syrup probe 23L is grounded by the syrup. This causes a low output from gate 18 and a high output from gate 22. This thus causes gate 20 to have two high inputs causing its output to go low or to the voltage level of -13 volts. This energizes the relay coil K3 so as to allow syrup pumping and water flow. Relays K2 and K3 each energize both a water flow solenoid and a peristaltic pump when the prime switch is released.

The aforementioned operation causes the liquid to rise in the tank 9 until the liquid contacts the low probe 17L. This causes a high logic level to be coupled to the gate 14 but this does not have any effect on the gate 14 because the other input to gate 14 from the output of gate 16 is low. Thus, the output of gate 14 remains at its high logic level state. This means that both inputs to the gate 20 are still at their high logic level state and thus the low level output from the gate 20 maintains the relay coil K3 energized. Thus, when the tank is being filled with liquid the contact of the low probe 17L in effect causes no action to be taken and the pumping simply continues.

It is to be noted that the fluid conductivity that the various probes measure is to "ground". This conductive path is provided by metallic tubing, cooling domes, and the fill tubes, so that there is, of course, a complete circuit path.

Now, when the high probe 19L is reached the input to the gate 12 goes to its high logic level state and the output of the gate 12 is thus at its low logic level state. This output couples to the gate 16 causing a high output from the gate 16. This high logic output couples back to the input of gate 14 and because the other input to gate 14 is also now high by virtue of the low probe being contacted previously, then the output of the gate 14 goes to its low state. This signal is coupled to the gate 20 for causing the output of the gate 20 to go to its high voltage level state (ground voltage). This de-energizes the relay coil K3. This in turn ceases the filling action as is desired.

When the output of the gate 12 goes to its low level state, this signal is also coupled to the gate 24 causing the output of gate 24 to go to its high state. This causes the LED 25 to cease illumination. The LED 25L illuminates only during the time that both inputs to the gate 24 are high which occurs before reaching the high probe and when out of syrup.

As the liquid is drawn from the tank the liquid level decreases and the liquid level falls below the probe 19L. When that occurs the output of the gate 12 goes high but again this has no effect on the gate 16 and thus the output of the gate 20 is still high maintaining the relay coil K3 de-energized. However, as the liquid level falls, the low probe 17L is eventually uncovered and thus the signal on line 17L to the gate 14 eventually goes low. This resets the bistable device comprised of gates 14 and 16 so that the output of gate 14 goes high. The other input to the gate 20 is also high and thus the output from gate 20 is low. This causes a re-energization of the relay coil K3, thus turning the liquid pump (and water solenoid) back on. They will remain on until the high probe is contacted, at which time the output of the gate 20 goes to its high state again de-energizing the relay coil K3. This action repeats itself and thus maintains the liquid level between the low probe 17L and the high probe 19L.

In addition to these two probes there is also provided an override probe 21L which couples to the corresponding terminal 21L. This input couples to the NAND gate 26 and the output of the NAND gate 26 couples to the base of transistor Q1 by way of resistor R6. The NAND gate 26 functions as an inverter as well as providing Schmitt trigger/driver action.

Normally, the top probe cap 21L is not contacted and thus the output of the gate 26 is high, maintaining the transistor Q1 in conduction. However, if due to a malfunction, the probe cap 21L is contacted, then the output of the gate 26 goes low and the transistor Q1 ceases conduction. The relay K1 is thus de-energized, removing power from the pump motors, solenoids, and logic circuitry.

The control circuit also has an input from the out of syrup sensor indicated at terminal 23L and coupling to the NAND gate 18, which also functions as a inverter. As long as there is syrup in the sensor block 106, the output of the gate 18 is low and the output of gate 22 in turn is high. The high output of gate 22 enables gate 20 and thus, as long as the system is not out of syrup, the relay K3 is capable of being energized in a selective manner under control from the output of the bistable device which comprises NAND gates 14 and 16 connected in a cross-coupled manner as illustrated.

In the event that the syrup reservoir runs out of syrup then the terminal 23L is no longer grounded and the input to the gate 18 is thus low. This causes a high output from gate 18 which is inverted by gate 22 to a low output. This low output to gate 20 over-rides the other input to gate 20 from the bistable device and causes a high output from the gate 20 which in turn de-energizes the relay K3. Thus, in accordance with the present invention there is provided for automatic interruption of any filling and pumping in the event that there is a detection that one is in an out-of-syrup state.

The operation of the control circuitry in connection with the right tank is substantially the same as the previous operation described in connection with the left tank. There can be considered at start-up that there is no liquid in the right tank or pump. Thus, each of the four liquid sensing probes associated with the right tank are ungrounded and thus input to each of the corresponding gates 32, 34, 38 and 26 is at its low level (-13 volts). The outputs of these gates are thus at their high level or logic "1" (0 volts). The high output from gate 34 cross-couples to one input from gate 36 and the output from gate 36 is thus low because both of its inputs are high. The high output from gate 34 also couples to gate 40. The high output from gate 38 is converted into a low output at the output of gate 42. This, in turn, causes a high output from the gate 40 which in this logic is a ground signal. This means that the relay K2 is not energized. Thus, at this point in the operation the circuit is in a static state with filling not having yet commenced.

Once the system is manually primed, the out-of-syrup probe 23R is grounded. This causes a low output from gate 38 and a high output from gate 42. This thus causes gate 40 to have two high inputs causing its output to go low or to the voltage level of -13 volts. This energizes the relay K2 so as to allow fluid pumping and fluid flow.

The aforementioned operation causes the liquid to rise in the tank 9 until the liquid contacts the low probe 17R. This causes a high logic level to be coupled to the gate 34 but this does not have any effect on the output of gate 34 because the other input to gate 34 from the output of gate 36 is low. Thus, the output of gate 34 remains at its high logic level state. This means that both inputs to the gate 40 are still at their high logic level state and thus the low level output from the gate 40 maintains the solenoid coil K2 energized. Thus, when the tank is being filled with liquid the contact of the low probe 17R in effect causes no action to be taken and the pumping simply continues.

Now, when the high probe 19R is reached the input to the gate 32 goes to its high logic level state and the output of the gate 32 is thus at its low logic level state. This output couples to the gate 36 causing a high output from the gate 36. This high logic output couples back to the input of gate 34 and because the other input to gate 34 is also now high by virtue of the low probe being contacted previously, then the output of the gate 34 goes to its low state. This signal is coupled to the gate 40 for causing the output of the gate 40 to go to its high voltage level state or to ground voltage. This de-energizes the solenoid coil K2. This in turn ceases the filling action as is desired.

When the output of the gate 32 goes to its low level state, this signal is also coupled to the gate 44 causing the output of gate 44 to go to its high state. This prevents the LED 25R from illuminating. The LED 25R illuminates when both of the inputs to the gate 44 are high which occurs before reaching the high probe and when out of syrup.

As the liquid is drawn from the tank the liquid level decreases and the liquid level falls below the probe 19R. When that occurs the output of the gate 32 goes high but now this has no effect on the gate 36 and thus the output of the gate 40 is still high maintaining the solenoid coil K2 de-energized. However, as the liquid level falls, the low probe 17R is eventually uncovered and thus the signal on line 17R to the gate 34 eventually goes low. This resets the bistable device comprised of gates 34 and 36 so that the output of gate 34 goes high. The other input to the gate 40 is also high and thus the output from gate 40 is low. This causes a re-energization of the relay coil K2. This thus turns the syrup pump and water solenoid valve back on and remains on until the high probe is contacted at which time the output of the gate 40 again goes to its high state again de-energizing the relay coil K2. This action repeats itself and maintains the liquid level thus between the low probe 17R and the high probe 19R.

In addition to these two probes there is also provided an over-ride probe 21R which couples to the left override probe 21L and hence may be considered an extension of that probe, the function of which has already been discussed. Also, in connection with FIG. 1A it is noted that the gates identified as gates U1 and U3 are 4093 type NAND gates providing Schmitt trigger action. The other gates such as gates U2 and U4 are standard NAND gates which may be of type 4011. The latter gates are not directly connected to the probes.

The control circuitry depicted herein (particularly in FIG. 1B) also includes a high input power line 50 coupled by way of the power switch 52 to both left and right pumps and solenoids. With regard to the left tank, it is noted that there is provided a pump motor 54 and associated water solenoid valve 56 (see valve 140 in FIG. 5). Similarly, with regard to the right tank there is provided a pump motor 58 and associated water solenoid valve 60 (see valve 128 in FIG. 5). The motors 54 and 58 preferably drive peristaltic pumps (see the pumps 112 and 116 in FIG. 2) that are adapted to pump syrup and operate at a speed of 160 RPM. The water flow is controlled by a 3.8 litre per min (1.0 GPM) flow control device and requires 2.07 - 2.41 bar (30-35 PSIG) flowing pressure to operate.

Similar operation also occurs with regard to the right tank. In this regard it is noted that there is a contact 61 which is operated from the prime switch 59 and which is adapted to open the path to the solenoid 60 when the prime switch 59 is operated. When either of the prime switches 55 or 59 is de-activated, they being momentary switches, then the contact 53 or 61 reverts to its normally closed position and permits the operation of the respective solenoid.

The syrup is contained in a reservoir and flows through a syrup sensor which is the subject matter of EP-A-0159118. The syrup is drawn past the syrup sensor by the peristaltic pump and from there is discharged into the bowl, above the beverage level. The out-of-syrup circuit allows the apparatus to run when the high resistance but conductive syrup conducts current from its sensor point through the syrup to ground. The sensor tip extends into the syrup flow and conducts current. When the syrup reservoir is empty, the syrup level drops in the sensor housing and the tip is no longer contacted by the syrup. It then no longer conducts and the logic controlling the system shuts down the apparatus.

With regard to the solenoid valves, they are adapted to deliver about 7.6 l (two gallons) per minute of water when both sides are filling. They use a 3/8ths inch OD copper line to connect to the machine. The water flow comes in from a main pipe and divides flowing through copper lines to the solenoid valves 56 and 60. From there the water flows through a flow control valve with its needle valve adjustment. From the water valve the water flows through a check valve and then through stainless steel tubing into the bowl or tank. Again, like the syrup line, the water line discharges water into the beverage bowl above the liquid level. With regard to the aforementioned FIG. 2 the line 15 may be for syrup and the line 13 for water.

In accordance with one of the important features of the present invention as highlighted previously, it is noted that the fill pipes 13 and 15 are disposed so that they extend above the probe assembly. This is clearly illustrated in FIG. 1 and even more so in FIG. 3. This prevents a back siphoning of beverage into the water line in case of a vacuum in the water line.

**Claims**

1. An automatic self-filling apparatus for dispensing a liquid comprised of water and a concentrated syrup, comprising; a tank (9) for dispensing the liquid; means (120, 130) for supplying water to the tank; sensor means (19) responsive to the rise and fall of liquid in the tank; pump means (112, 116) for pumping the syrup into the tank; first and second fill pipes (13, 15) for respectively feeding water from the supply means (120, 130) and syrup from the pump means (112, 116) into the tank (9); and control means (Figure 1) responsive to said sensor means for controlling operation of the pump means and the water supply means; characterised in that:

said sensor means comprises an upstanding post member (11) in the tank, first and second probe means (17, 19) disposed at relatively low and relatively high locations on the post so as to sense respective relatively high and low liquid levels in the tank and producing probe signals in response thereto, said control means being responsive to said probe signals to maintain the level of liquid in the tank between said relatively high and low levels, said fill pipes (13, 15) extending substantially coextensively with said post member (11) upwardly from a common support member (H) at the bottom of the tank so as to define a closely positioned array.

2. Apparatus according to claim 1 wherein said control means is arranged to permit operation of said pump means and not said water supply means when the liquid level in the tank (9) is below said relatively low level.

3. Apparatus according to claim 2 including a prime switch (53, 55; 59, 61, SW1) for operating the pump means (54, 58) when the liquid in the tank (9) is below said relatively low level.

4. Apparatus according to any preceding claim wherein said control means controls operation of said pump means (112, 116) and said water supply means concurrently when the liquid level is between said high and low levels.

5. Apparatus according to any preceding claim including further probe means (21) disposed above both said first and second probe means, said control means (Figure 1A) being arranged to disable the apparatus in the event of said liquid level in the tank reaching the further probe means (21).

6. Apparatus according to any preceding claim wherein said probe means comprise probe rings (17, 19, 21) formed in the post member.

7. Apparatus according to any preceding claim wherein the control means comprises a bistable logic gate (14, 16; 34, 36) device having respective inputs (17L, R; 19L, R) for receiving signals from first and second probe means (17, 19).

8. Apparatus according to claim 7 including a relay (K2, K3) for operating the pump means (54, 58) and means (20, 40) coupling the output of the bistable device (14, 16; 34, 36) to the relay for activation thereof.

9. Apparatus according to claim 8 wherein said bistable device comprises a pair of cross-coupled gates (14, 16; 34, 36).

10. Apparatus according to claim 8 or 9 wherein said means (20, 40) coupling the output of the bistable device includes a logic gate.

11. Apparatus according to any preceding claim including syrup sensor means (106, 108) for detecting a discontinuity in syrup supply to the pump means and for disabling operation of both said pump means and said water supply means.

12. Apparatus according to claim 11 when appendant to claim 9 wherein said syrup sensor means (106, 108) is coupled to said logic gate (20, 40) to de-energise said relay (K2, K3) and stop said pump means (54, 58) in the event that the apparatus is out of syrup.

13. Apparatus according to claim 11 or 12 including a two input logic gate (24, 44) responsive to the signal from the second probe (17) and to the syrup sensor means, and an indicator lamp (25L, R) driven by the output of said two input logic gate (24, 44) to indicate an out of syrup condition.

14. Apparatus according to any one of claim 8 or 9 or 12 or 13 wherein said gates comprise NAND gates.

15. Apparatus according to any preceding claim wherein the outlet ports of both said fill pipes (13, 15) are arranged to introduce water and syrup into the tank at a position above the level of liquid therein.

16. Apparatus according to claim 15 wherein said fill pipes (13, 15) introduce liquid into the tank at a position above the probe means (17, and 19 or 21).

17. Apparatus according to claim 15 or 16 wherein said fill pipes (13, 15) have turned upper ends.

18. Apparatus according to claim 17 wherein said fill pipes (13, 15) introduce liquid into the tank (9) at a position above the first probe (19) so as to thereby prevent back syphoning of liquid from the tank into the water supply means.

19. Apparatus according to any preceding claim wherein said water supply means (120, 130, 13) includes a solenoid operated valve for controlling supply of mains water to the tank (9).

20. Apparatus according to any preceding claim wherein the common support means (H) contains evaporating cooling means (C) for cooling liquid in the tank (9).

21. Apparatus according to any preceding claim including a pair of said tanks (9) each provided with a respective said sensor means (17, 19) pump means (112, 116) and control means (Figure 1).

**Patentansprüche**

1. Automatisch nachfüllende Einrichtung zur Ausgabe einer Flüssigkeit bestehend aus Wasser und einem konzentrierten Sirup, mit einem Behälter (9) zur Ausgabe der Flüssigkeit, mit Mitteln (120, 130) zur Zufuhr von Wasser zu dem Behälter, mit auf den Anstieg und Abfall der Flüssigkeit in dem Behälter ansprechenden Abtastmitteln (19), mit Pumpeinrichtungen (112, 116) zum Pumpen des Sirups in den Behälter, mit ersten und zweiten Füllrohren (13, 15) zur Zufuhr von Wasser von den Zufuhrmitteln (120, 130) bzw. zur Zufuhr von Sirup von den Pumpeinrichtungen (112, 116) in den Behälter (9) sowie mit einem Steuergerät (Figur 1), das auf die Abtastmittel anspricht, um den Betrieb der Pumpeinrichtungen und der Wasserzufuhrmittel zu steuern, dadurch gekennzeichnet, daß die besagten Abtastmittel einen aufwärts stehenden Stab (11) in dem Behälter und erste und zweite Sonden (17, 19) beinhalten, die an einer relativ niedrigen bzw. relativ hohen Stelle an dem Stab angeordnet sind, um entsprechend relativ hohe bzw. niedrige Flüssigkeitsspiegel in dem Behälter abzutasten und daraufhin Sondensignale zu erzeugen, wobei das Steuergerät auf diese Sondensignale anspricht, um den Flüssigkeitsspiegel in dem Behälter zwischen dem besagten hohen und niedrigen Stand zu halten, und wobei sich diese Füllrohre (13, 15) im wesentlichen gleichweit mit dem Stab (11) von einem gemeinsamen Träger (H) am Boden des Behälters aufwärts erstrecken derart, daß sie eine eng benachbarte Reihe bilden.

2. Einrichtung nach Anspruch 1, dadurch gekennzeichnet, daß das Steuergerät so ausgebildet ist, daß es einen Betrieb der besagten Pumpeinrichtungen und nicht der besagten Wasserzufuhrmittel zuläßt, wenn der Flüssigkeitsspiegel in dem Behälter (9) unterhalb des relativ niedrigen Standes liegt.

3. Einrichtung nach Anspruch 2, gekennzeichnet durch einen Vorbereitungsschalter (53, 55; 59, 61, SW1) zum Betrieb der Pumpeinrichtungen (54, 58), wenn die Flüssigkeit in dem Behälter (9) unterhalb des relativ niedrigen Standes ist.

4. Einrichtung nach einem der vorhergehenden Ansprüche, dadurch gekennzeichnet, daß das besagte Steuergerät den Betrieb der Pumpeinrichtungen (112, 116) und zugleich der Wasserzufuhrmittel steuert, wenn der Flüssigkeitsspiegel zwischen dem hohen und dem niedrigen Stand liegt.

5. Einrichtung nach einem der vorhergehenden Ansprüche, gekennzeichnet durch eine weitere Sonde (21), die sowohl oberhalb der besagten ersten Sonde als auch oberhalb der besagten zweiten Sonde angeordnet ist, wobei das besagte Steuergerät (Figur 1A) ausgelegt ist, um die Einrichtung abzuschalten in dem Fall, daß der besagte Flüssigkeitsspiegel in dem Behälter die weitere Sonde (21) erreicht.

6. Einrichtung nach einem der vorhergehenden Ansprüche, dadurch gekennzeichnet, daß die Sonden an dem Stab ausgebildete Ringsonden (17, 19, 21) beinhalten.

7. Einrichtung nach einem der vorhergehenden Ansprüche, dadurch gekennzeichnet, daß das Steuergerät einen bistabilen logischen Gatterschaltkreis (14, 16; 34, 36) mit entsprechenden Eingängen (17L, R; 19L, R) für die Signale der ersten und zweiten Sonden (17, 19) aufweist.

8. Einrichtung nach Anspruch 7, gekennzeichnet durch ein Relais (K2, K3) zum Betrieb der pumpeinrichtungen (54, 58) und durch Mittel (20, 40), die das Ausgangssignal des bistabilen Schaltkreises (14, 16; 34, 36) dem Relais zu dessen Erregung zuführen.

9. Einrichtung nach Anspruch 8, dadurch gekennzeichnet, daß der bistabile Schaltkreis ein Paar kreuzgekoppelter Gatter (14, 16; 34, 36) aufweist.

10. Einrichtung nach Anspruch 8 oder 9, dadurch gekennzeichnet, daß die Mittel (20, 40) am Ausgang des bistabilen Schaltkreises ein logisches Gatter beinhalten.

11. Einrichtung nach einem der vorhergehenden Ansprüche, gekennzeichnet durch Abtastmittel (106, 108) für den Sirup, die eine Unterbrechung in der Sirupzufuhr zu den Pumpeinrichtungen erfassen und sowohl den Betrieb der Pumpeinrichtungen als auch den Betrieb der Wasserzufuhrmittel beenden.

12. Einrichtung nach Anspruch 11 in Abhängigkeit von Anspruch 9, dadurch gekennzeichnet, daß die Abtastmittel (106, 108) für den Sirup an das logische Gatter (20, 40) angeschlossen sind, um das besagte Relais (K2, K3) zu entregen und die Pumpeinrichtungen (54, 58) zu stoppen in dem Fall, daß der Einrichtung Sirup fehlt.

13. Einrichtung nach Anspruch 11 oder 12, gekennzeichnet durch ein logisches Gatter (24, 44) mit zwei Eingängen, das auf das Signal der zweiten Sonde (17) und der Abtastmittel für den Sirup anspricht, und durch eine Anzeigelampe (25L, R), die von dem Ausgangssignal des besagten logischen Gatters (24, 44) mit den zwei Eingängen angesteuert wird, um ein Fehlen des Sirup anzuzeigen.

14. Einrichtung nach einem der Ansprüche 8, 9, 12 oder 13, dadurch gekennzeichnet, daß die Gatter NAND-Gatter beinhalten.

15. Einrichtung nach einem der vorhergehenden Ansprüche, dadurch gekennzeichnet, daß die Auslaßöffnungen beider Füllrohre (13, 15) so angeordnet sind, daß Wasser und Sirup in einer Position oberhalb des Flüssigkeitsspiegels in den Behälter eingeführt werden.

16. Einrichtung nach Anspruch 15, dadurch gekennzeichnet, daß die Füllrohre (13, 15) Flüssigkeit an einer Position oberhalb der Sonden (17 und 19 oder 21) in den Behälter einführen.

17. Einrichtung nach Anspruch 15 oder 16, dadurch gekennzeichnet, daß die besagten Füllrohre (13, 15) abgebogene obere Enden aufweisen.

18. Einrichtung nach Anspruch 17, dadurch gekennzeichnet, daß die besagten Füllrohre (13, 15) Flüssigkeit an einer position oberhalb der ersten Sonde (19) in den Behälter (9) einführen, um dadurch ein Rücksaugen der Flüssigkeit vom Behälter in die Wasserzufuhrmittel zu verhindern.

19. Einrichtung nach einem der vorhergehenden Ansprüche, dadurch gekennzeichnet, daß die besagten Wasserzufuhrmittel (120, 130, 13) ein Magnetventil zur Steuerung des Hauptwassers zum Behälter (9) beinhalten.

20. Einrichtung nach einem der vorhergehenden Ansprüche, dadurch gekennzeichnet, daß der gemeinsame Träger (H) Verdampferkühlmittel (C) zur Kühlung der Flüssigkeit in dem Behälter (9) aufweist.

21. Einrichtung nach einem der vorhergehenden Ansprüche, gekennzeichnet durch ein Paar der besagten Behälter (9), die jeweils mit entsprechenden Abtastmitteln (17, 19), mit Pumpeinrichtungen (112, 116) und Steuergeräten (Figur 1) ausgerüstet sind.

**Revendications**

1. Appareil à remplissage automatique pour délivrer un liquide constitué d'eau et d'un sirop concentré, comportant: un réservoir (9) pour délivrer le liquide; des moyens (120, 130) pour fournir de l'eau au réservoir; des moyens de détection (19) sensibles à la montée et à la descente du liquide dans le réservoir; des moyens de pompage (112, 116) pour pomper le sirop dans le réservoir; des premier et second tuyaux de remplissage (13, 15) pour délivrer respectivement de l'eau depuis les moyens d'alimentation (120, 130) et du sirop à partir des moyens de pompage (112, 116) dans le réservoir (9); et des moyens de commande (Figure 1) sensibles auxdits moyens de détection pour commander le fonctionnement des moyens de pompage et des moyens d'alimentation en eau; caractérisé en ce que:
lesdits moyens de détection comportent un montant vertical (11) dans le réservoir, des premier et second capteur (17, 19) disposés en des emplacements relativement bas et relativement haut sur le montant de façon à détecter des niveaux de liquide respectifs relativement haut et bas dans le réservoir et à délivrer en réponse des signaux de capteur, lesdits moyens de commande étant sensibles auxdits signaux de capteur pour maintenir le niveau de liquide dans le réservoir entre lesdits niveaux relativement haut et bas, lesdits tuyaux de remplissage (13, 15) s'étendant sensiblement sur la même hauteur que ledit montant (11) vers le haut à partir d'un organe de support commun (H) au fond du réservoir de façon à définir une rangée étroitement positionnée.

2. Appareil selon la revendication 1, dans lequel lesdits moyens de commande sont agencés pour permettre un fonctionnement des moyens de pompage et non desdits moyens d'alimentation en eau lorsque le niveau de liquide dans le réservoir (9) est au-dessous dudit niveau relativement bas.

3. Appareil selon la revendication 2, comprenant un interrupteur d'amorçage (53, 55; 59, 61, SW1) pour actionner les moyens de pompage (54, 58), lorsque le liquide dans le réservoir (9) est au-dessous dudit niveau relativement bas.

4. Appareil selon l'une quelconque des revendications précédentes, dans lequel lesdits moyens de commande commandent le fonctionnement desdits moyens de pompage (112, 116) et desdits moyens d'alimentation en eau concurremment lorsque le niveau de liquide se trouve entre lesdits niveaux haut et bas.

5. Appareil selon l'une quelconque des revendications précédentes, comprenant un autre capteur (21) disposé au-dessus desdits premier et second capteurs, lesdits moyens de commande (Figure 1A) étant agencés pour couper l'appareil dans le cas où ledit niveau de liquide dans le réservoir atteint l'autre capteur (21).

6. Appareil selon l'une quelconque des revendications précédentes, dans lequel lesdits capteurs comportent des capteurs annulaires (17, 19, 21) réalisés dans le montant.

7. Appareil selon l'une quelconque des revendications précédentes, dans lequel les moyens de commande comportent une porte logique bistable (14, 16; 34, 36) possédant des entrées respectives (17L, R; 19L, R) pour recevoir des signaux depuis lesdits premier et second capteurs (17, 19).

8. Appareil selon la revendication 7, comprenant un relais (K2, K3) pour actionner les moyens de pompage (54, 58) et des moyens (20, 40) couplant la sortie du dispositif bistable (14, 16; 34, 36) au relais pour exciter celui-ci.

9. Appareil selon la revendication 8, dans lequel ledit dispositif bistable comporte une paire de portes couplées en croix (14, 16; 34, 36).

10. Appareil selon la revendication 8 ou 9, dans lequel lesdits moyens (20, 40) couplant la sortie du dispositif bistable comportent une porte logique.

11. Appareil selon l'une quelconque des revendications précédentes, comprenant des moyens de détection de sirop (106, 108) en vue de détecter une interruption d'alimentation en sirop aux moyens de pompage et pour interrompre le fonctionnement à la fois desdits moyens de pompage et desdits moyens d'alimentation en eau.

12. Appareil selon la revendication 11, rattachée à la revendication 9, dans lequel lesdits moyens de détection de sirop (106, 108) sont couplés à ladite porte logique (20, 40) pour désexciter ledit relais (K2, K3) et stopper lesdits moyens de pompage (54, 58) dans le cas où l'appareil est à court de sirop.

13. Appareil selon la revendication 11 ou 12, comprenant une porte logique à deux entrées (24, 44) sensible au signal provenant du second capteur (17) et aux moyens détecteurs de sirop, et une lampe indicatrice (25L, R) actionnée par la sortie de ladite porte logique à deux entrées (24, 44) pour indiquer un état de manque en sirop.

14. Appareil selon l'une quelconque des revendications 8 ou 9 ou 12 ou 13, dans lequel lesdites portes sont des portes NON ET.

15. Appareil selon l'une quelconque des revendications précédentes, dans lequel les orifices de sortie desdits deux tuyaux de remplissage (13, 15) sont agencés pour introduire de l'eau et du sirop dans le réservoir en une position au-dessus du niveau du liquide dans celui-ci.

16. Appareil selon la revendication 15, dans lequel lesdits tuyaux de remplissage (13, 15) introduisent du liquide dans le réservoir en une position au-dessus des capteurs (17, et 19 ou 21).

17. Appareil selon la revendication 15 ou 16, dans lequel lesdits tuyaux de remplissage (13, 15) ont des extrémités supérieures courbées.

18. Appareil selon la revendication 18, dans lequel lesdits tuyaux de remplissage (13, 15) introduisent du liquide dans le réservoir (9) en une position au-dessus du premier capteur (19) de façon à empêcher ainsi un siphonage en retour de liquide depuis le réservoir dans les moyens d'alimentation en eau.

19. Appareil selon l'une quelconque des revendications précédentes, dans lequel lesdits moyens d'alimentation en eau (120, 130, 13) comprennent une soupape électromagnétique pour commander la délivrance d'eau du réseau se distribution au réservoir (9).

20. Appareil selon l'une quelconque des revendications précédentes, dans lequel le moyen de support commun (H) contient des moyens de refroidissement par évaporation (C) pour refroidir le liquide dans le réservoir (9).

21. Appareil selon l'une quelconque des revendications précédentes, comprenant une paire desdits réservoirs (9) munis chacun de moyens de détection (17, 19) de moyens de pompage (112, 116) et de moyens de commande (Figure 1) respectifs.

Fig.1A

FROM REF. 20 FIG. 1A    FROM REF. 26 FIG.1A    FROM REF. 40 FIG. 1A

*Fig. 1B*

EP 0 161 042 B1

EP 0 161 042 B1

Fig. 2

Fig. 3

Fig. 4

3

## Fig. 5